Europäisches Patentamt

European Patent Office

Office européen des brevets

(19)

(11) Publication number: 0 350 556

A2

# (12) EUROPEAN PATENT APPLICATION

(21) Application number: 88500115.6

(22) Date of filing: 28.11.88

(51) Int. Cl.4: C11D 3/395

(30) Priority: 12.07.88 ES 8802186

(43) Date of publication of application:
17.01.90 Bulletin 90/03

(84) Designated Contracting States:
AT BE CH DE FR GB GR IT LI LU NL SE

(71) Applicant: HENKEL IBERICA, S.A.
C/ Corcega, 480-492
E-08025 Barcelona(ES)

(72) Inventor: Knopf, Wolfgang
C/ Marqués de Villalonga, 9
E-08017 Barcelona(ES)
Inventor: Garcia Galera, Horacio
C/ Artesa de Segre, 4
E-08022 Barcelona(ES)
Inventor: Ferrer Requena, Ricardo
C/ Camelias, 39
E-08024 Barcelona(ES)

(74) Representative: Gomez-Acebo y Pombo, José
Miguel
c/o CLARKE, MODET & Co. Paseo de la
Castellana 164
E-28046 Madrid(ES)

(54) Continuous process for the manufacture of a hypochlorite bleaching composition.

(57) Continous process for the manufacture of a whitening composition with a hypochlorite base, which starts with water which has been previously decalcified up to a strength of 0.4° F, distinguished by the fact that the decalcified water is driven though a pump towards equipment made from non-corrodible material, this equipment having one or more venturis which suck up hypoclorite with an approximate concentration of 170 g/l and, in a given case, an alkalinic hydroxide which is necessary to adjust the pH value of the whitening composition and, also in a given case, auxilliary products and additives such as perfumes and colourants.

The turbulance caused by the venturi effect provokes dilution/mixing of the three main components of the composition (water-hypochlorite-hydroxide), in a continuous manner.

During this process the appropriate proportions are obtained by means of modifying the respective flows of the components.

Once dilution has taken place, final filtration is carried out, in a given case using disposable cartridges of approximately 1 micron.

FIG. 1

## CONTINUOUS PROCESS FOR THE MANUFACTURE OF A WHITENING COMPOSITION WITH A HYPOCHLORITE BASE

This invention refers to a continuous process for the manufacture of a whitening composition with an alkalinic metal hypochlorite base, together with sodium hypochlorite, an alkalinic metal hydroxide and a sodium hydroxide, this composition containing, in a given case, the usual additives for this type of composition such as perfumes and colourants.

There are already several known processes for load or discontinous (batch) obtention of whitening compositions for both domestic and industrial use, having an alkalinic hypochlorite base, such as the one described in the applicant's Spanish patent 554.709.

These discontinous processes give stable and good quality compositions, however, they have certain technological and atmospherical disadvantages.

In the discontinuous manufacturing processes, the bleach packaging lines need a bulk product supply which exceeds the manufacturing capacity of the batch system, making it necessary to have a conditioned packaging programme with an inherent loss in flexibility. In addition, it makes it necessary to have significant storage facilities before packaging can begin.

Another disadvantage of a discontinuous manufacturing system for bleaches with a hypochlorite base is the necessity to have available large storage tanks for the bleach components, such as the concentrated hypochlorite and the alkalinic hydroxide and sodium hydroxide solutions. Moreover, both these and the manufacturing tanks must be cleaned at certain intervals which means that complementary tanks must be installed to be used during periods when the original ones are being cleaned and/or maintained.

Lastly, the tanks currently used in this branch of industry for the discontinous manufacture of whitening compositions with a hypochlorite base usually have an open surface at the upper section which, by favouring evaporation into the surrounding environment, makes it necessary to take adequate measures to protect the geographical zones surrounding the manufacturing installations of these products.

Moreover, it cannot be avoided that during cleaning and maintenance work to the tanks, decanters and filters used in the discontinuous process, sewage waters orginating in these sections of the installation contain quantities of hypochlorite which are noticeable to a greater of lesser extent, due to which they must undergo a decontamination process before being ejected into the public drainage system or being reused in industry.

According to the invention, by means of using the continous process for the manufacture of a whitening composition with a hypochlorite base, all and each one of the above mentioned disadvantages are resolved.

The continuous process for the manufacture of a whitening composition with a hypochlorite base consists basically of starting with water which has been previously decalcified up to a strength of 0.4° F. This decalcified water is driven by means of a pump, like a centrifugal pump, towards a piece of equipment made of non-corrodible material such as PVC, which is provided with one or more venturi elements which, due to the respective depression caused, suck up the concentrated hypochlorite having a concentration of approximately 170 g/l of active chlorine, from a tank of concentrated hypochlorite. In another given case an alkalinic metal hydroxide is sucked up by means of another venturi, as is the sodium hydroxide, these being necessary to adjust the pH value of the composition. The turbulence caused by the effect of the venturis prompts the dilution/mixing process in respect of the three main components of the composition, water-hypochlorite-hydroxide and, in a given case, in respect of the auxilliary products and additives which are usual in this type of composition such as perfumes and colourants, and in this way a composition is obtained by a continuous process, this composition being ready to be filtered and packaged, without the need for intermediate space-consuming storage apparatus which are expensive to maintain.

According to the invention, it is preferable to start with hard water to obtain decalcified water with a strength of 0.4F which is stored in a level tank.

According to the invention, it is also preferable that the level tanks of decalcified water, alkalinic hypochlorite and alkalinic hydroxide, together with those of the auxilliary products and additives if used, should maintain the most constant levels possible in order to avoid concentration oscillations in the final product.

The liquid pressures in front of the venturis should be constant.

According to the invention, it is the venturi in this process that makes the mixture, thereby obtaining the whitening composition. This device consists of three inlet tubes through which the decalcified water, alkalinic hypochlorite and alkalinic hydroxide flow, each having its respective regulation valve, and three flow meters which indicate which flow is being regulated.

The major component of the formula is driven through the tube by means of a venturi which sucks in the alkalinic hypochlorite and alkalinic hydroxide at the levels established by the regulation valve.

The turbulence caused at the venturi exit provokes instantaneous mixing of the components of the whitening composition with a hypochlorite base.

According to the invention, during this process the flow value of the whitening composition and its pH value can be regulated by means of using one or more products from the group formed by soda, sodium carbonate, sodium bicarbonate and carbonic anhydride.

According to this invention, in a given case, the perfume used contains a solvent and a surface active agent, and this solvent can be chosen from either water and/or a solution of sodium hypochlorite.

The surface active agent can be chosen from alkylether sulphates and alkylbenzene sulphonates in which the alkyl group is a chain with 10 to 16 carbon atoms, polyoxylenic alkylphenoles in which the alkyl group has 8 to 9 carbon atoms, dimethylalkyl betaines and alkyldiphenylether disulphonates and dimethylalkylamino oxides in which at least 90% of the alkyl groups have 10 to 15 branched carbon atoms or a linear chain of them.

According to this invention, during this process, the components of the perfume can be chosen from amongst a large variety of useable perfumes, such as monoterpenic, monocyclic and bicyclic alcohols and their esters with alkanoic acids having 2 to 3 carbon atoms, such as isoborneol, dihydroterpineol and isobornyl acetates, as in the above mentioned Spanish patent 554.709, in the name of the same applicant.

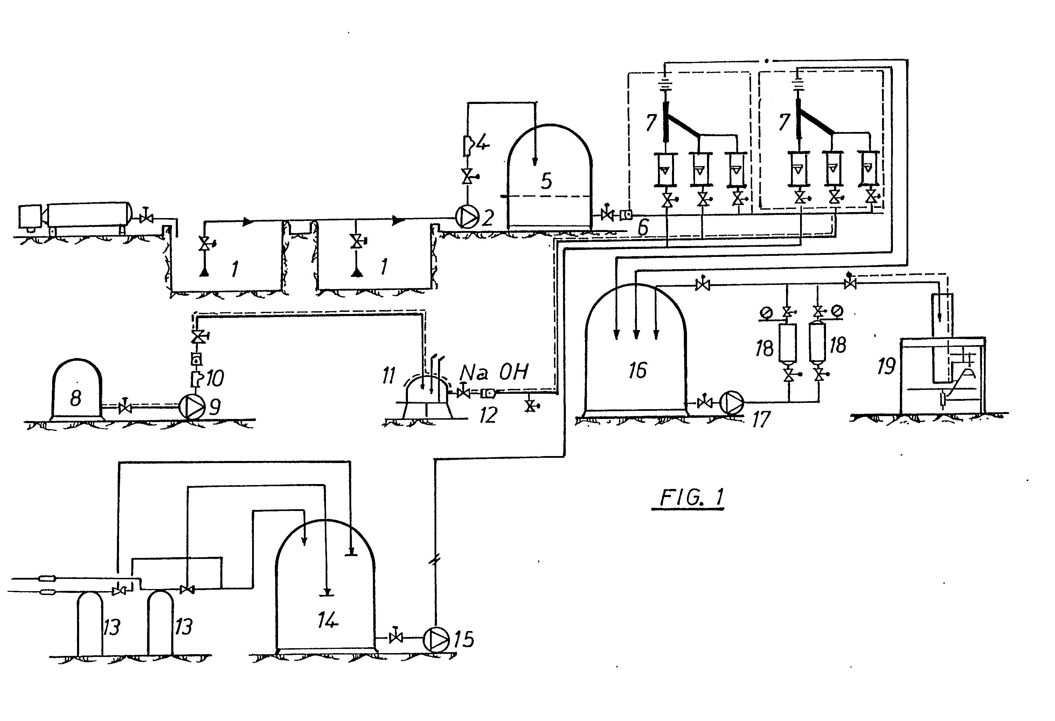

Figure 1 attached shows a diagrammatic example of how to carry out installation for the continuous process for the manufacture of a whitening composition with a hypochlorite base in accordance with the invention.

The key to the figure is:

1. Manufacturing tank.
2. Pump.
3. Reserves.
4. Filter.
5. Tank.
6. Retention valve.
7. Bleach making equipment.
8. Storage tank.
9. Pump.
10. Filter.
11. Level tank.
12. Retention valve.
13. Decalcifier equipment.
14. Tank.
15. Pump.
16. Tanks.
17. Pump.
18. Filter
19. Packaging unit.

The following is an illustrative and by no means restrictive description of a practical way of carrying out the manufacturing process for a whitening composition with a hypochlorite base, in accordance with this invention.

Example

The process is carried out in an installation which comprises two water decalcifiers (13) with a capacity of 12.5 m³/h each one.

A tank made of polyester-glass fibre with a 35 m³ capacity for the storage of decalcified water (14) with its drive pumps.

A tank (1) with a 70 m³ useable volume, into which the hypochlorite is unloaded from the barrels.

A level tank of polyester-glass fibre (5) with a 12 m³ capacity.

An anticorrosive centrifugal pump (24) which feeds the level tank, with its corresponding filter.

Two venturis (7), acting as dosimeters/mixers for the continuous manufacture of bleach, each one capable of producing 18.5 m³ of bleach.

Parrallel filtering equipment (18) with anticorrosive centrifugal pump.

The installation has a complementary small level tank (11) which will contain caustic soda at 50%.

Starting with hard water, decalcified water is obtained at 0-0.4° F which is stored in the tank level.

Two pumps drive the decalcified water towards the venturi equipment, which in turn suck up the hypochlorite and the soda in predetermined quantities, these quantities being valve regulated and visible via the flowmeters which are supplied with an alarm.

The mixture obtained in this way can be analysed on leaving the venturi by means of a sample collecting valve.

The bleach obtained passes to the storage tank prior to being filtered, this latter process being carried out by driving the bleach contained in the tank through the filters. As of that moment the bleach is ready to be used.

Experience of using this example installation shows that water, hypochlorite and soda pressures should be kept as constant as possible.

The constant levels of the hypochlorite and the soda should be at approximately the same height as the venturi.

It is considered that the nature of the invention and the method of using it in practice have been sufficiently described and it is necessary to point out that the above mentioned clauses are subject to alteration, always where the fundamental principle is not changed.

## Claims

1.- Continuous process for the manufacture of a whitening composition with a hypochlorite base, distinguished by the fact that it starts with water which has been previously decalcified up to a strength of 0 to 1° F, this decalcified water being driven by means of a pump, such as a centrifugal pump, towards equipment made of non-corrodible material such as polyvinyl chloride (PVC), this equipment having one or more venturis which in turn suck up the concentrated hypochlorite, having a concentration of approximately 170 g/l of active chlorine, from a tank of concentrated hypochlorite. In another given case and by means of another venturi device, a metal alkalinic hydroxide such as sodium hydroxide (which is necessary to adjust the pH value of the composition) is sucked up, as are the auxilliary products and additives normally used in this type of composition, such as perfumes and colourants. Finally, the composition formed in this way is filtered.

2.- A process as in patent claim 1, distinguished by the fact that it starts with water which has an initial strength of 15 to 21° F and is decalcified up to a final strength of 0 to 1° F, preferably 0.4° F.

3.- A process as in patent claim 1, distinguished by the fact that the respective continuous dosification of each one of the components (water-hypochlorite-hydroxide) and the auxilliary additives, is effected by means of an individual venturi, within the current of either the decalcified water or the major component.

4.- A process as in patent claims 1 and 3, distinguished by the fact that the level tanks of decalcified water, alkalinic hypochlorite, alkalinic hydroxide and the auxilliary products and additives where used, have a noticeably constant level.

5.- A process as in patent claims 1 to 4, distinguished by the fact that the constant hypochlorite and the alkalinic hydroxide levels are noticeably at the same height of the venturi.

6.- A process whereby, instead of the constant levels mentioned in points 4 and 5, any other method of obtaining constant pressure is used at the entrance to the mixing equipment.

7.- A process as in patent claim 1, distinguished by the fact that final filtration is carried out through disposable cartridges which have a pore opening of approximately 1 micron.

*FIG. 1*